(19) **Europäisches Patentamt European Patent Office Office européen des brevets**

(11) **EP 2 025 031 B1**

(12) **EUROPEAN PATENT SPECIFICATION**

(45) Date of publication and mention of the grant of the patent:
**23.03.2011 Bulletin 2011/12**

(51) Int Cl.:
*H01M 8/10* (2006.01)       *B01D 71/36* (2006.01)
*C08J 5/22* (2006.01)        *B01D 71/38* (2006.01)
*B01D 71/26* (2006.01)       *B01D 71/32* (2006.01)
*B01D 71/34* (2006.01)

(21) Application number: **06753496.6**

(22) Date of filing: **05.05.2006**

(86) International application number:
**PCT/EP2006/004221**

(87) International publication number:
**WO 2007/128330 (15.11.2007 Gazette 2007/46)**

(54) **FUEL CELL AND POLYMER ELECTROLYTE MEMBRANE**

BRENNSTOFFZELLE UND POLYMER-ELEKTROLYTMEMBRAN

PILE À COMBUSTIBLE ET MEMBRANE ELECTROLYTE POLYMÈRE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**18.02.2009 Bulletin 2009/08**

(73) Proprietor: **Pirelli & C. S.p.A.**
**20126 Milano (IT)**

(72) Inventors:
• **ZAOPO, Antonio**
**I-10126 Milano (IT)**
• **LOPES CORREIA TAVARES, Ana, Berta**
**Quebec J3X 1S2 (CA)**
• **BALLABIO, Omar**
**I-20126 Milano (IT)**

(74) Representative: **Giannesi, Pier Giovanni et al**
**Pirelli & C. S.p.A.**
**Industrial Property (cdc 0270)**
**Viale Sarca, 222**
**20126 Milano (IT)**

(56) References cited:
**WO-A-2004/004053       US-A1- 2005 181 255**
**US-B1- 6 444 343**

• **SCOTT K ET AL: "Performance of the direct methanol fuel cell with radiation-grafted polymer membranes" JOURNAL OF MEMBRANE SCIENCE, ELSEVIER SCIENCE, AMSTERDAM, NL, vol. 171, no. 1, June 2000 (2000-06), pages 119-130, XP004194077 ISSN: 0376-7388**
• **ANONYMOUS: "Polyolefin" WIKIPEDIA, THE FREE ENCYCLOPEDIA, [Online] 27 June 2006 (2006-06-27), XP002392927 Retrieved from the Internet: URL:http://en.wikipedia.org/wiki/ Polyolefi n> [retrieved on 2006-08-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a fuel cell.

More particularly, the present invention relates to a fuel cell incorporating a polymer electrolyte membrane comprising at least one polyolefin grafted with side chains containing proton conductive functional groups.

Moreover, the present invention relates to a polymer electrolyte membrane comprising at least one polyolefin grafted with side chains containing proton conductive functional groups.

Furthermore, the present invention relates to an apparatus powered by said fuel cell.

Fuel cells are highly efficient electrochemical energy conversion devices that directly convert the chemical energy derived from renewable fuel into electrical energy.

Significant research and development activities have been focused on the development of proton-exchange membrane fuel cells. Proton-exchange membrane fuel cells have a polymer electrolyte membrane disposed between a positive electrode (cathode) and a negative electrode (anode). The polymer electrolyte membrane is composed of an ion-exchange polymer. Its role is to provide a means for ionic transport and for separation of the anode compartment and the cathode compartment.

More in particular, the traditional proton-exchange membrane fuel cells have a polymer electrolyte membrane placed between two gas diffusion electrodes, an anode and a cathode respectively, each usually containing a metal catalyst supported by an electrically conductive material. The gas diffusion electrodes are exposed to the respective reactant gases, the reductant gas and the oxidant gas. An electrochemical reaction occurs at each of the two junctions (three phases boundaries) where one of the electrodes, electrolyte polymer membrane and reactant gas interface.

In the case of hydrogen fuel cells, the electrochemical reactions occuring during fuel cell operation at both electrodes (anode and cathode) are the following:

Anode: $H_2 \rightarrow 2H^+ + 2e^-$;
Cathode: $\frac{1}{2}O_2 + 2H^+ + 2e^- \rightarrow H_2O$;
Overall: $H_2 + \frac{1}{2}O_2 \rightarrow H_2O$.

During fuel cell operations, hydrogen permeates through the anode and interact with the metal catalyst, producing electrons and protons. The electrons are conducted via an electrically conductive material through an external circuit to the cathode, while the protons are simultaneously transferred via an ionic route through a polymer electrolyte membrane to the cathode. Oxygen permeates to the catalyst sites of the cathode where it gains electrons and reacts with proton to form water. Consequently, the products of the proton-exchange membrane fuel cells reactions are water, electricity and heat. In the proton-exchange membrane fuel cells, current is conducted simultaneously through ionic and electronic route. Efficiency of said proton-exchange membrane fuel cells is largely dependent on their ability to minimize both ionic and electronic resistivity.

Polymer electrolyte membranes play an important role in proton-exchange membrane fuel cells. In proton-exchange membrane fuel cells, the polymer electrolyte membrane mainly has two functions: (1) it acts as the electrolyte that provides ionic communication between the anode and the cathode; and (2) it serves as a separator for the two reactant gases (e.g., $O_2$ and $H_2$). In other words, the polymer electrolyte membrane, while being useful as a good proton transfer membrane, must also have low permeability for the reactant gases to avoid cross-over phenomena that reduce performance of the fuel cell. This is especially important in fuel cell applications in which the reactant gases are under pressure and the fuel cell is operated at elevated temperatures. If electrons pass through the membrane, the fuel cell is fully or partially shorted out and the produced power is reduced or even annulled.

Fuel cell reactants are classified as oxidants and reductants on the basis of their electron acceptor or electron donor characteristics. Oxidants include pure oxygen, oxygen-containing gases (e.g., air) and halogens (e.g., chlorine) and hydrogen peroxide. Reductants include hydrogen, carbon monoxide, natural gas, methane, ethane, formaldheyde, ethanol, ethyl ether, methanol, ammonia and hydrazine.

Polymer electrolyte membranes are generally based on polymer electrolytes which have negatively charged groups attached to the polymer backbone. These polymer electrolytes tend to be rather rigid and are poor proton conductors unless water is adsorbed. The proton conductivity of hydrated polymer electrolyte dramatically increases with water content.

Therefore, the proton-exchange membrane fuel cells generally require humidified gases, e.g. hydrogen and oxygen (or air), for their operations.

Among the different types of fuel cells under development, the direct methanol fuel cell (DMFC) using polymer electrolyte membranes are promising candidates for the application in portable electronic devices and in transportation (e.g. electrical vehicles).

In a direct methanol fuel cells, methanol is oxidized to carbon dioxide at the anode and oxygen is reduced at the cathode according to the following reaction scheme:

Anode: $CH_3OH + H_2O \rightarrow CO_2 + 6H^+ + 6e^-$;
Cathode: $3/2O_2 + 6H^+ + 6e^- \rightarrow 3H_2O$;
Overall: $CH_3OH + 3/2O_2 \rightarrow CO_2 + 2H_2O$.

The protons are simultaneously transferred through the polymer electrolyte membrane from the anode to the cathode.

One of the major problems correlated to the use of direct methanol fuel cells is the permeation of methanol from the anode to the cathode through the membrane, a phenomenon usually known as methanol cross-over. Said methanol cross-over causes both depolarization losses at the cathode and conversion losses in terms of lost fuel. In order to improve the performance of the direct methanol fuel cell, it is necessary to eliminate or at least to reduce said methanol cross-over. Consequently, the development of polymer electrolyte membranes which have very low permeability to methanol is desired.

Different types of polymer electrolyte membranes such as, for example, polyphenolsulfonic acid membranes, polystyrene sulfonate membranes, polytrifluorostyrene membranes, have been used. At present, perfluorinated membranes are the most commonly used.

Conventional perfluorinated membranes have a non-crosslinked perfluoroalkylene polymer main chain which contain proton-conductive functionals groups. When such membranes are ionized, the main chain is highly hydrophobic, whereas the proton-conductive side chains are highly hydrophylic. Nafion® membranes, made by DuPont, are a typical example of the above mentioned membranes.

However, use of Nafion® membranes is associated with some drawbacks such as, for example, the fuel cross-over. Cross-over problems with Nafion® membranes are especially troublesome in direct methanol fuel cell applications, where excessive methanol transport, which reduces efficiency and powder density, occurs. Methanol cross-over not only lowers the fuel utilization efficiency but also adversely affects the oxygen cathode performance, significantly lowering fuel cell performance. Moreover, the Nafion® membranes are very difficult and very expensive to be manufactured.

Various attempts have been made to provide polymer electrolyte membranes which have comparable or improved properties with respect to Nafion® membranes and which are also much less expensive to be manufactured.

For example, International Patent Application WO 98/22989 discloses a polymer electrolyte membrane composed of polystyrene sulfonic acid (PSSA) and poly(vinylidene fluoride) (PVDF). Said membrane may be prepared, for example, starting from the preparation of a PVDF membrane which could serve as an inert polymer matrix which is subsequently impregnated with polystyrene divinyl benzene mixtures (PS/DVB mixtures) to produce interpenetrating polymer networks; then, the membrane so obtained is sulfonated. Instead of PVDF, other materials may be used as the inert polymer matrices such as, for example, polytetrafluoroethylene-N-vinylpyrrolidone, polytetrafluoroethylene, polyvinylalchol-polyacrylonitrile, polyvinyl chloride, polyvinyl alcohol, polyacrylamide, polyethylene oxide, polypropylene, polyethylene, polysulfone, sulfonated polysulfone, polyethersulfone, polyetherimide, polymethylsulfoxide, polyacrylonitrile, glass membrane composites (hollow fibers), ceramic matrix host composites, zeolite matrix hosts. The abovementioned membrane is said to be particularly useful in low-temperature direct methanol fuel cell and it is said to enhance the efficiency and the electrical performances of the fuel cell by decreasing methanol cross-over.

International Patent Application WO 04/004053 in the name of the Applicant, disloses a fuel cell comprising:

(a) an anode;
(b) a cathode;
(c) a polymer electrolyte membrane placed between the anode and the cathode which comprises at least one polyolefin grafted with side chains containing proton conductive functional groups;

wherein said fuel cell has:

- a value of cell resistance at 90°C not higher than 0.30 Ω cm², preferably comprised between 0.02 Ω cm² and 0.25 Ω cm², more preferably comprised between 0.05 Ω cm² and 0.20 Ω cm²;
- a value of cell resistance at 20°C differing from the value of cell resistance at 90°C of an amount not higher than 90%, preferably not higher than 70%, more preferably not higher than 50%, with respect to the value of cell resistance at 90°C.

The abovementioned polymer electrolyte membrane is said to be particularly useful in fuel cells operating at low temperatures, in particular at a temperatures range of from 20°C to 90°C. Moreover, in the case of a direct methanol fuel cell, the abovementioned polymer electrolyte membrane is said to show a reduced methanol cross-over.

The Applicant has now found that it is possible to further improving the performances of the fuel cell above disclosed by a polymer electrolyte membrane according to claim 1.

In particular, the Applicant has found that by using a polymer electrolyte membrane comprising at least one polyolefin, said polyolefin being obtained by grafting side chains containing proton conductive functional groups onto a polyolefin having a crystallinity of from 41% to 48%, it is possible to obtain fuel cells having improved performances. More in particular, the Applicant has found that, the use of said polymer electrolyte membrane allows to obtain fuel cells which show an improved power density, in particular in the presence of a high methanol concentration. Moreover, in the case of direct methanol fuel cells, said polymer electrolyte membrane shows a reduced methanol crossover.

According to a first aspect, the present invention relates to a fuel cell comprising:

(a) an anode;
(b) a cathode;
(c) a polymer electrolyte membrane comprising at least one polyolefin, said polyolefin being obtained by grafting side chains containing proton conductive functional groups onto a polyolefin having a crystallinity of from 41% to 48%, preferably of from 42% to 46%.

Said crystallinity may be determined by Differential Scanning Calorimetry (DSC) analysis according to ASTM standard D3417-83: further details about said analysis may be found in the examples which follows.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, said fuel cell is a direct methanol fuel cell (DMFC).

For the purposes of the present description and of the claims which follow, the expression "direct methanol fuel cell" means a fuel cell in which the methanol is directly fed into the fuel cell, without any previous chemical modification, and is oxidized at the anode.

According to a further preferred embodiment, said fuel cell is a hydrogen fuel cell.

According to a further aspect, the present invention relates to a polymer electrolyte membrane comprising at least one polyolefin, said polyolefin being obtained by grafting side chains containing proton conductive functional groups onto a polyolefin having a crystallinity of from 41% to 48%, preferably of from 42% to 46%.

According to one preferred embodiment, said side chains containing proton conductive functional groups are grafted to the polyolefin through an oxygen bridge.

According to one preferred embodiment, the amount of grafting [$\Delta p$ (%)] of said side chains containing proton conductive functional groups is of from 10% to 150%, preferably of from 15% to 100%.

The amount of grafting [$\Delta p$ (%)] may be calculated by the following formula:

$$[\Delta p \ (\%)] = [(W_t - W_0)/W_0] \times 100$$

wherein $W_0$ is the weight of the membrane before the graft polymerization reaction and $W_t$ is the weight of the membrane after the graft polymerization reaction.

Advantageously, the grafting is a radiation grafting. The radiation-grafting may be obtained by irradiation processes known in the art. For example, said radiation-grafting may be made as disclosed, for example, in the International Patent Application WO 04/004053 above disclosed.

According to a further aspect, the present invention relates to an apparatus powered by the fuel cell according to the present invention. Said apparatus may be an engine for vehicle transportation or, alternatively, an electronic portable device such as, for example, a mobile phone, a laptop computer, a radio, a camcorder, a remote controller.

According to one preferred embodiment, the polyolefin which may be used in the present invention may be selected, for example, from: polyethylene, polypropylene, polyvinylchloride, ethylene-propylene copolymer (EPR) or ethylene-propylene-diene terpolymer (EPDM), ethylene vinyl acetate copolymer (EVA), ethylene butylacrylate copolymer (ERA), polyvinylidenedichloride, polyvinylfluoride (PVF), polyvinylidenedifluoride (PVDF), vinylidene fluoride tetrafluoroethylene copolymer (PVDF-TFE), polyvinylidene-hexafluoropropylene copolymer, chlorotrifluoroethylene-ethylene copolymer, chlorotrifluoroethylene-propylene copolymer, polychloroethylene, ethylene-tetrafluoroethylene copolymer (ETFE), propylene-tetrafluoroethylene copolymer, propylene-hexafluoropropylene copolymer, ethylene-hexafluoropropylene copolymer, or mixture thereof.

According to a further preferred embodiment, said polyolefin may be selected, for example, from homopolymers or copolymers of ethylene having a density, measured at 23°C, according to standard ASTM D1505-03, of from 0.860 g/cm$^3$ to 0.940 g/cm$^3$, preferably of from 0.900 g/cm$^3$ to 0.930 g/cm$^3$.

Preferably, said homopolymers or copolymers of ethylene may be selected, for example, from:

- medium density polyethylene (MDPE);
- low-density polyethylene (LDPE);
- linear low-density polyethylene (LLDPE), very-low-density polyethylene (VLDPE), ultra-low-density polyethylene (ULDPE), which are copolymer of ethylene with at least one aliphatic $\alpha$-olefin of formula $CH_2$=CH-R wherein R represents a linear or branched, preferably linear, alkyl group containing from 1 to 12 carbon atoms such as, for example, propylene, 1-butene, 1-pentene, 1-hexene, 1-octene, 1-decene;

or mixtures thereof.

Low density polyethylene (LDPE) is particularly preferred.

Examples of homopolymers or copolymers of ethylene which may be used in the present invention and which are currently commercially available are the products Riblene®, Flexirene®, or Clearflex® from Polimeri Europa, MDPE HT 514 from Total Petrochemical, Engage® from DuPont-Dow Elastomers, Exact® from Exxon Chemical.

According to a further preferred embodiment, said polymer electrolyte membrane (c) may further comprise at least one homopolymer of ethylene having a density, measured at 23°C, according to standard ASTM D1505-03, of from 0.940 $g/cm^3$ to 0.970 $g/cm^3$ (i.e., high density polyethylene - HDPE), said homopolymer of ethylene being grafted with side chains containing proton conductive functional groups. Preferably, said at least one high density polyethylene may be present in an amount not higher than 70% by weight, more preferably in an amount of from 5% by weight to 50% by weight, with respect to the total weight of the polyolefin present in the polymer electrolyte membrane.

Examples of high density polyethylene which may be used in the present invention and which are currently commercially available are the products Eraclene® from Polimeri Europa.

The homopolymer or copolymer of ethylene above disclosed may be obtained by known polymerization techniques in the presence of Ziegler-Natta catalysts or, in the presence of a single-site catalysts such as, for example, metallocene catalysts or of a so-called "Constrained Geometry Catalysts".

According to one preferred embodiment, the side chains may be selected from any hydrocarbon polymer chain which contains proton conductive functional groups or which may be modified to provide proton conductive functional groups. The side chains may be grafted onto the polyolefin by graft polymerization of unsaturated hydrocarbon monomers, said hydrocarbon monomers being optionally halogenated. Said unsaturated hydrocarbon monomer may be selected, for example, from: styrene, chloroalkylstyrene, $\alpha$-methyl-styrene, $\alpha,\beta$-dimethylstyrene, $\alpha,\beta,\beta$-trimethylstyrene, orthomethylstyrene, p-methylstyrene, meta-methyl-styrene, $\alpha$-fluorostyrene, trifluorostyrene, p-chloro-methylstyrene, acrylic acid, methacrylic acid, vinylalkyl sulfonic acid, divinylbenzene, triallyl-cianurate, vinylpyridine, or copolymers thereof; or mixtures thereof. Styrene, $\alpha$-methylstyrene, are particularly preferred.

According to one preferred embodiment, the proton conductive functional groups may be selected from sulfonic acid groups, phosphoric acid groups, or mixtures thereof. Sulfonic acid groups are particularly preferred.

The percentage of proton conductive functional groups present in the polymer electrolyte membrane of the present invention [$\Delta g$ (%)] is defined as the membrane weight gain after the addition of such groups, e.g. after the sulfonation process, and may be calculated according to the formula already disclosed above in connection with the calculation of the amount of grafting [$\Delta p$ (%)], *mutatis mutandis*, i.e. $W_0$ and $W_t$ are the dry weight of the membrane, respectively, before and after the addition of the proton conductive functional groups. Preferably, [$\Delta g$ (%)] is of from 10% to 100%, more preferably from 15% to 70%.

According to one preferred embodiment, said polymer electrolyte membrane has a thickness of from 50 $\mu$m to 250 $\mu$m, preferably of from 90 $\mu$m to 200 $\mu$m.

The present invention is now further illustrated with reference to the following attached figures:

Fig. 1: is a schematic representation of a liquid feed organic fuel cell;
Fig. 2: is a graph showing polarization curves and power output curves recorded for a membrane electrode assembly (MEA) according to the present invention and for a comparative membrane electrode assembly (MEA);
Fig. 3: is a schematic representation of the device used for the methanol permeation determination;
Fig. 4: is a schematic representation of the four-electrode glass cell used for the membrane resistivity determination.

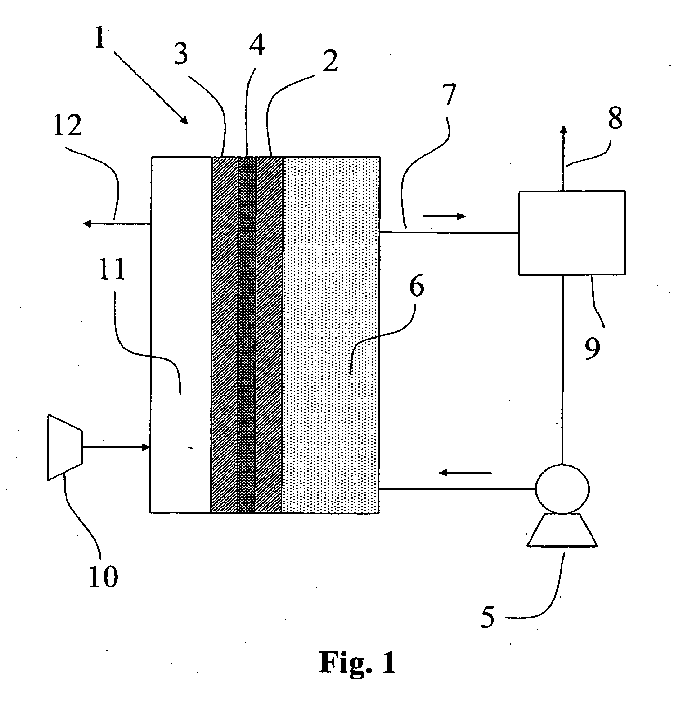

Fig. 1 shows a fuel cell (1) comprising an anode (2), a cathode (3) and the polymer electrolyte membrane (4) according to the present invention. Preferably, the anode, the cathode and the polymer electrolyte membrane are integrated to form a single composite structure, with the polymer electrolyte membrane interposed between the two electrodes, commonly known as a membrane electrode assembly (MEA). Said membrane electrode assembly is usually placed in a housing which is not represented in Fig. 1.

Anode (2) and cathode (3) typically comprise catalyst particles (e.g., Pt or its alloys) optionally supported on carbon particles. The catalyst particles are dispersed throughout a polymeric binder or matrix which typically comprises either a proton-conductive polymer and/or a fluoropolymer. When a proton-conductive material is used, it typically comprises the same proton-conductive polymer used for the polymer electrolyte membrane. The polymeric binder or matrix provides a robust structure for catalyst retention, adheres well to the polymer electrolyte membrane, aids in water management within the cell and enhances the ion exchange capability of the electrodes.

Anode (2) and cathode (3) are preferably formed from a platinum or from a platinum based alloy, unsupported or supported on a high surface area carbon. In the case of platinum based alloy, platinum is usually alloyed with another metal such as, for example, ruthenium, tin, iridium, osmium or rhenium. In general, the choice of the alloy depends on the fuel to be used in the fuel cell. Platinum-ruthenium is preferable for electro-oxidation of methanol.

A pump (5) circulates an aqueous solution of an organic fuel in the anode compartment (6). The organic fuel is withdrawn via an appropriate outlet conduit (7) and may be recirculated. Carbon dioxide formed at the anode (2) may be vented via an outlet conduit (8) within tank (9). The fuel cell is also provided with an oxygen or air compressor (10) to feed humidified oxygen or air into the cathode compartment (11).

Prior to operation, an aqueous solution of the organic fuel such as, for example, methanol, is introduced into the anode compartment (6) of the fuel cell, while oxygen or air is introduced into the cathode compartment (11). Next, an external electrical load (not showed in Fig. 1) is connected between anode (2) and cathode (3). At this time, the organic fuel is oxidized at the anode and leads to the production of carbon dioxide, protons and electrons. Electrons generated at the anode (2) are conducted via external electrical load to the cathode (3). The protons generated at the anode (2) migrate through the polymer electrolyte membrane (4) to cathode (3) and react with oxygen and electrons (which are transported to the cathode via the external electrical load) to form water and carbon dioxide. Water and carbon dioxide produced are transported out of the cathode chamber (11) by flow of oxygen, through outlet (12).

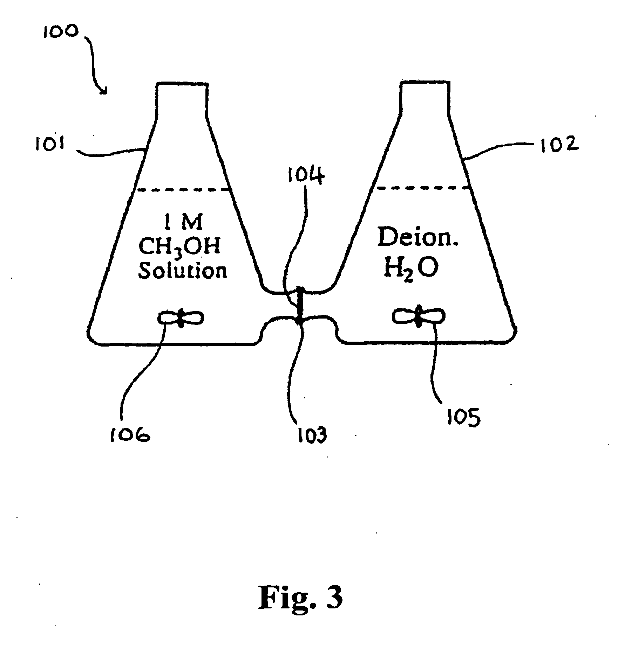

Fig. 3 shows the device (100) used for the methanol permeation determination. Vessel (101) and vessel (102) are connected by a ground down O-ring joint (103) which accommodates a polymer electrolyte membrane sample (104). The individual capacity of each vessels (101) and (102) is 250 ml and the inner diameter of joint was 3 cm.

The membrane sample (104) is introduced into O-ring joint (103). At the same time, 250 ml of a methanol solution (12.4 M) are added to vessel (101) and 250 ml of deionized water are added to vessel (102). At regular measured intervals, samples are withdrawn from vessels (102) and analyzed for methanol content using a high pressure liquid chromatograph analysis (HPLC) by means of a HP 35900e chromatograph (from Hewlett-Packard) coupled with a Shimadzu rid g-a system, utilizing a Waters 7.8*300 mm Ultrahydrogel 120 column. During all the analysis time, the stirrer 105 and 106 were activated in order to prevent concentration build up in vessels (101) and (102), respectively. As a satndard, a 100 ppm aqueous methanol solution was used. The variation of the methanol concentration in vessel (102) was plotted against time and the methanol permeability trough the membrane was determined from the slope of the linear region of the obtained graph: the obtained data are given in Table 1.

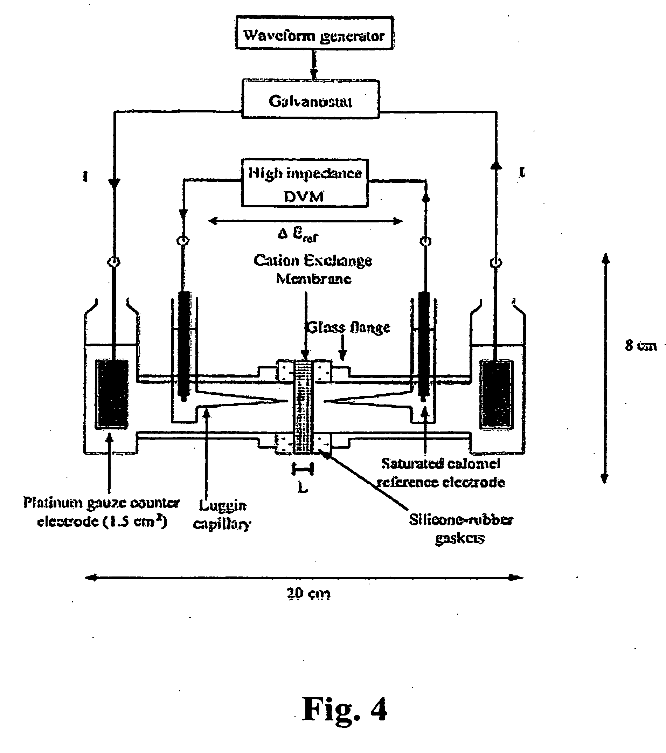

Fig. 4 shows the four-electrode glass cell used for the proton conductivity determination. Said determination was carried out by measuring the rate of proton conductivity [$(\rho)$ expressed in $(\Omega\ cm^{-1})$], at room temperature, on fully hydrated membranes, using the method described by S. Slade et al. in "Journal of The Electrochemical Society" (2002), 149, (12), A1556-A1564.

The measurement were carried out at room temperature and using 0.5 mol/dm$^3$ $H_2SO_4$ aqueous solution as electrolyte.

Two platinum electrodes (1.5 cm$^2$) and two saturated calomel reference electrodes (Metrohm) were placed on each side of the membrane. The two calomel electrodes were placed at a fixed distance from the membrane surface using Luggin capillaries, and the circular section of the membrane was 0.87 cm$^2$.

The platinum electrodes were connected to a potentiostat/galvanostat (Amel 551 type) and a linear galvanodynamic sweep between 0 mAcm$^{-2}$ and 500 mAcm$^{-2}$ was applied to the electrodes. The net cell reaction was water electrolysis to produce $H_2$ at the cathode and $O_2$ to the anode. The potential difference between the two reference electrodes was measured using a high-impedance digital voltmeter (Amel 631 Differential Electrometer type).

The potential difference between the two reference electrodes was plotted against the current, and the cell resistance could be determined from the slope of the line.

The electrolyte resistance was determined by measuring the cell resistance in the absence of the membrane ($R_{H2SO4}$) and, subsequently, in the presence of the membrane ($R_{cell}$). The membrane resistance ($R_{memb}$) was determined as follows:

$$(R_{memb}) = (R_{cell}) - (R_{H2SO4}).$$

The proton conductivity [$(\rho)$ expressed in $(\Omega\ cm^{-1})$] was then calculated using the following equation:

$$(\rho)_{memb} = \frac{l}{R_{memb} \times A}$$

wherein 1 is the membrane thickness and A is the membrane section (i.e., 0.87 cm$^2$).

The obtained data were given in Table 1.

The present invention will be further illustrated hereinbelow by means of examples.

EXAMPLE 1 (comparative)

Polymer electrolyte membrane preparation

A low density polyethylene (LDPE - Riblene® FL20 from Polimeri Europa) having the following characteristics:

- density = 0.921 g/cm$^3$ (measured at 23°C, according to ASTM standard D1505-03);
- crystallinity: 39.5%;

was used.

The crystallinity was measured by Differential Scanning Calorimetry (DSC) analysis using a Mettler Toledo DSC 820 differential scanning calorimeter, according to ASTM standard D3417-83. The following thermal cycle was applied:

a) heating from 25°C to 180°C at 10°C/min;
b) holding for 10 min at 180°C;
c) cooling from 180°C to 25°C at 10°C/min;
d) heating from 25°C to 180°C at 10°C/min.

The level of cristallinity is proportional to the heat of fusion determined by DSC analysis, using the value of 290 J/g as the conversion factor corresponding to the theoretical heat of fusion of a 100% crystalline polyethylene.

Thus, the crystallinity was calculated by the following formula:

$$\texttt{\% crystallinity} = \Delta H_m / (\Delta^0 H_m) * 100$$

wherein:

- $\Delta H_m$ is the heat of fusion of the used low density polyethylene (namely, the LDPE - Riblene® FL20);
- $\Delta^0 H_m$ is the heat of fusion of a 100% crystalline polyethylene (namely, 290 J/g).

A 100 μm film of the above reported low density polyethylene was irradiated by γ-rays at a total radiation dose of 0.05 MGy, at a radiation rate of 0.43 Gy/s, from a $^{60}$Co-irradiation source, in air, at room temperature.

Styrene (purity ≥99%) from Aldrich was washed with an aqueous solution of sodium hydroxide at 30% and then washed with distilled water until the wash water had a neutral pH. The so treated styrene was then dried over calcium chloride (CaCl$_2$) and was distilled under reduced pressure.

Then, using the styrene purified as above, a styrene/methanol solution (70:30 vol%) containing 3 mg/ml of ferrous sulfate (FeSO$_4$·7H$_2$O) was prepared.

The irradiated LDPE film was immersed in 100 ml of the styrene/methanol solution prepared as above using a reaction vessel equipped with a reflux condenser. The reaction vessel was then heated in a water bath until boiling of the solution.

After 85 min (grafting time) the LDPE film was removed from the reaction vessel, washed with toluene and methanol three times, then dried in air and vacuum at room temperature to constant weight.

Then, the grafted LDPE film was immersed in a concentrated sulfuric acid solution (96%) and heated for 300 min at 98°C in a glass ampoule supplied with reflux condenser. Thereafter, the LDPE film was taken out of the solution, was washed with different aqueous solutions of sulfuric acid (80%, 50% and 20% respectively), and finally with distilled water until the wash water had a neutral pH. Then, the film was dried in air at room temperature and after in vacuum at 50°C to constant weight obtaining a membrane according to the present invention.

The amount of grafted polystyrene [Δp (%)] and the sulfonation degree [Δg (%)] were calculated as disclosed above and resulted to be: Δp = 33% and Δg = 38%. The polymer electrolyte membrane had a final thickness of 130 μm.

EXAMPLE 2 (comparative)

Polymer electrolyte membrane preparation

A membrane was prepared as disclosed in Example 1 the differences being the following:

- the grafting time: 105 min;
- the sulfonation time: 320 min.

The amount of grafted polystyrene [Δp (%)] and the sulfonation degree [Δg (%)] were calculated as disclosed above and resulted to be: Δp = 50% and Δg = 33%. The polymer electrolyte membrane had a final thickness of 135 μm.

EXAMPLE 3

Polymer electrolyte membrane preparation

A membrane was prepared as disclosed in Example 1 the differences being the following:

- low density polyethylene (LDPE - Riblene® FC40 from Polimeri Europa) having the following characteristics:

  - density = 0.928 g/cm$^3$ (measured at 23°C, according to ASTM standard D1505-03);
  - crystallinity: 45% (measured by Differential Scanning Calorimetry (DSC) analysis as disclosed above);

- the grafting time: 85 min;
- the sulfonation time: 320 min.

The amount of grafted polystyrene [Δp (%)] and the sulfonation degree [Δg (%)] were calculated as disclosed above and resulted to be: Δp = 30% and Δg = 29%. The polymer electrolyte membrane had a final thickness of 120 μm.

EXAMPLE 4

Polymer electrolyte membrane preparation

A membrane was prepared as disclosed in Example 1 the differences being the following:

- low density polyethylene (LDPE - Riblene® FC40 from Polimeri Europa) having the following characteristics:

  - density = 0.928 g/cm$^3$ (measured at 23°C, according to ASTM standard D1505-03);
  - crystallinity: 45% (measured by a Differential Scanning Calorimetry (DSC) analysis as disclosed above);

- the grafting time: 105 min;
- the sulfonation time: 320 min.

The amount of grafted polystyrene [Δp (%)] and the sulfonation degree [Δg (%)] were calculated as disclosed above and resulted to be: Δp = 40% and Δg = 30%. The polymer electrolyte membrane had a final thickness of 120 μm.
The membranes obtained as disclosed in the above Examples 1-4, were subjected to Water-Uptake (WU) determination.
To this aim, a 5 cm x 5 cm sample of each one of the membranes obtained according to Examples 1-4 above disclosed was immersed in 10 ml of distilled water, for 24 hours at room temperature. The sample was then removed from water, the excess of water was eliminated using a filter paper, and the membrane was weighted ($m_{wet}$). The sample was then dried in a vacuum oven at 80°C, for 2 hours, and its weight was determined ($m_{dry}$). The amount of water adsorbed by the membrane over its dry weight (WU) was then calculated using the following formula:

$$WU\ (\%) = \frac{m_{wet} - m_{dry}}{m_{dry}} \times 100\ .$$

The obtained results are given in Table 1.

EXAMPLE 5

Membrane characterisation

i) Methanol permeation determination

The methanol permeation [(p) expressed in (mol cm$^{-2}$ s$^{-1}$) or (p') expressed in (mol cm$^{-2}$ s$^{-1}$), (p') being the value normalized to membrane thickness] determination was carried out according to the method described above using a device schematically represented in Fig. 3. The membranes obtained according to Examples 1-4 above disclosed were utilized. The obtained results are given in Table 1.

ii) Proton Conductivity Determination

The proton conductivity [($\rho$) expressed in ($\Omega$ cm$^{-1}$) ] of the membranes was measured according to the method described above using a device schematically represented in Fig. 4. The membranes obtained according to Examples 1-4 above disclosed were utilized. The obtained results are given in Table 1.

Example 6

Electrochemical characterization of membrane electrode assembly (MEA)

Fuel cell electrodes were made and used to make the membrane electrode assembly (MEA) opeerating as follows.
The anode and cathode consist on a composite structure formed by a thin (about 20 $\mu$m) diffusion layer and a catalytic layer, sequentially deposited on polytetrafluoro ethylene (PTFE) treated carbon cloth (AvCarb™ 1071 HCB), 0.33 mm thick. The diffusion layer was made from acetylene carbon black and 20 wt% of polytetrafluoro ethylene (PTFE), with a final acetylene carbon balck loading of 2 mg/cm$^2$.

i) Diffusion layers preparation

A 18 cm x 12 cm sample of polytetrafluoro ethylene (PTFE) treated carbon cloth, 0.33 mm thick, was fixed onto a metallic plate pre-heated at 40°C, the temperature of the plate was then raised to 80°C.
650 mg of finely grinded acetylene carbon black were sonicated for 10 minutes with 10.4 ml of deionised water and 10.4 ml of isopropyl alcohol. Subsequently, 0.2 ml of 60 wt% polytetrafluoro ethylene (PTFE) aqueous suspension (Aldrich), 5.2 ml of water and 5.2 ml of isopropyl alcohol, were added to the mixture, which was sonicated for 15 minutes. The resulting slurry was sprayed over the carbon cloth to obtain a final loading of 2 mg/cm$^2$ of acetylene carbon black. The deposited layer was left to dry at 90°C in air, then heat treated at 350°C, for 4 hours, in an oven with air flux, increasing the temperature at a rate of 5°C/min.

ii) Anode preparation

A 6 cm x 6 cm sample of diffusion layer/support obtained as disclosed above at item i), was cut and heat treated, at 80°C, onto a metallic plate. 273.2 mg of 60% PtRu/Vulcan® catalyst (E-TEK) were dispersed in water, sonicated for 10 minutes, added with 2.70 g of a 5 wt% Nation® dispersion (Aldrich), and further sonicated for 20 minutes. The resulting catalyst ink was spread over the gas diffusion layer to obtain a final loading of 2 mg/cm$^2$ of Pt. The remaining solvent was then evaporated under air stream. The resulting anode was then left to dry in air, for 18 hours, at room temperature.

iii) Cathode preparation

A 6 cm x 6 cm sample of diffusion layer/support of obtained as disclosed above at item i), was cut and heat treated at 80°C, onto a metallic plate. 360 mg of 30% Pt/Vulcan® catalyst (E-TEK) were dispersed in water, sonicated for 10 minutes, added with 3.55 g of a 5 wt% Nation® dispersion (Aldrich), and further sonicated for 20 minutes. The resulting catalyst ink was spread over the gas diffusion layer to obtain a final loading of 2 mg/cm$^2$ of Pt. The reamining solvent was then evaporated under air stream. The resulting cathode was then left to dry in air, for 18 hours, at room temperature.

iv) Membrane/Electrode Assembly (MEA) preparation

MEA was prepared using the electrodes obtained in the above disclosed items ii) and iii), and the electrolyte membranes described in the above disclosed Examples 1-4.

A 5 cm x 5 cm sample of each one of the membranes obtained according to Examples 1-4, and 2.5 cm x 2.5 cm sample of each one of the electrodes obtained according to items ii) and iii), were used for MEA preparation.

The two electrodes were placed on either side of the membrane, with their catalytic layer facing the membrane and the obtained assembly was sandwiched between two polytetrafluoro ethylene (PTFE) sheets and hot pressed using an hydraulic press. The plates of the hydraulic press (30 cm$^2$) were previously heated at 80°C. After inserting the assembly above disclosed, the plates temperature was raised to 100°C, then a 3 bar pressure was applied, for 1.5 minutes.

Each one of the obatained MEA, was installed in a single cell test system (Globo Tech Inc), containing two copper current collector end plates and two graphite plates containing rib channel patterns allowing the passage of an aqueous solution to the anode and humidified air to the cathode.

After inserting the MEAs assembly into their single test housing, the cell was equilibrated at 30°C using distilled water and humidified air. Water was supplied to the anode through a peristaltic pump and a pre-heater maintained at the cell temperature. Humidified air was fed to the cathode at atmospheric pressure, and the air humidifier was maintained at a temperature 10°C above the cell temperature.

The single cell was connected to an AC Impedance Analyser type 4338B (Agilent), and the cell resistance was measured at a fixed frequency of 1 KHz and under open circuit conditions. When a constant value of cell resistance was reached, the anode was fed with 1M methanol solution at a feed rate of 2.4 ml/min, while the air flux at the cathode was changed to 500 ml/min. The cell resistance at open circuit and 30°C was measured again. The methanol concentration was then changed to 12.4 M.

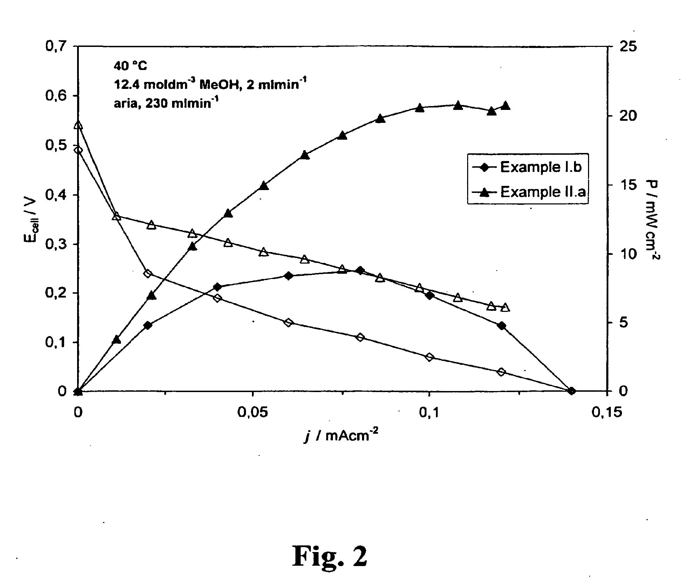

The polarization curves and the power output curves were recorded: the obtained maximum power output density [($P_{max}$) expressed in (mW cm$^{-2}$)] values were reported in Table 1. Moreover, the polarization curves and the power output curves recorded for the MEA assembly using a polymer electrolyte membrane of Example 2 (comparative) and for the MEA assembly using a polymer electrolyte membrane of Example 3 according to the present invention were reported in Fig. 2.

TABLE 1

| EXAMPLE | WU (%) | ($\rho$) ($\Omega$ cm$^2$) | (p) (mol cm$^{-2}$ s$^{-1}$) | (p)' (mol cm$^{-2}$ s$^{-1}$) | ($P_{max}$) (mW cm$^{-2}$) |
|---|---|---|---|---|---|
| 1 (*) | 131 | 4.84 | 12.6 x 10$^{-7}$ | 1.6 x 10$^{-8}$ | 6.0 |
| 2 (*) | 155 | 3.73 | 14.8 x 10$^{-7}$ | 2.0 x 10$^{-8}$ | 8.0 |
| 3 | 79 | 9.09 | 6.9 x 10$^{-7}$ | 0.8 x 10$^{-8}$ | 20.0 |
| 4 | 89 | 8.83 | 8.0 x 10$^{-7}$ | 0.96 x 10$^{-8}$ | 15.2 |
| (*) : comparative. <br> (p): methanol permeation rate; <br> (p') : methanol permeation rate normalized to the membrane thickness. | | | | | |

**Claims**

1.  Polymer electrolyte membrane obtained by grafting side chains containing proton conductive functional groups onto at least one film of a polyethylene, **characterized in that** said polyethylene has a crystallinity of from 41% to 48%.

2.  Fuel cell comprising:

    (a) an anode;
    (b) a cathode;
    (c) a polymer electrolyte membrane according to claim 1

**3.** Fuel cell according to claim 2, wherein said polyethylene has a crystallinity of from 42% to 46%.

**4.** Fuel cell according to claim 2 or 3, which is a direct methanol fuel cell.

**5.** Fuel cell according to claim 2 or 3, which is a hydrogen fuel cell.

**6.** Fuel cell according to any one of the preceding claims, wherein said side chains containing proton conductive functional groups are grafted to the polyethylene through an oxygen bridge.

**7.** Fuel cell according to any one of the preceding claims, wherein the amount of grafting of said side chains containing proton conductive functional groups is of from 10% to 150%.

**8.** Fuel cell according to any one of the preceding claim, wherein said said polyethylene is selected from:

    - medium density polyethylene (MDPE);
    - low-density polyethylene (LDPE);
    - linear low-density polyethylene (LLDPE), very-low-density polyethylene (VLDPE), ultra-low-density polyethylene (ULDPE), which are copolymer of ethylene with at least one aliphatic $\alpha$-olefin of formula $CH_2=CH-R$ wherein R represents a linear or branched, preferably linear, alkyl group containing from 1 to 12 carbon atoms such as propylene, 1-butene, 1-pentene, 1-hexene, 1-octene, 1-decene;

    or mixtures thereof.

**9.** Fuel cell according to any one of the preceding claims, wherein said proton conductive functional groups are selected from sulfonic acid groups and phosphoric acid groups.

**10.** Fuel cell according to any one of the preceding claims, wherein said polymer electrolyte membrane has a thickness of from 50 $\mu$m to 250 $\mu$m.

**11.** Apparatus powered by a fuel cell according to any one of claims 2 to 10.

**12.** Apparatus according to claim 11 which is an engine for vehicle transportation.

**13.** Apparatus according to claim 11, which is an electronic portable device.


**Patentansprüche**

**1.** Polymer-Elektrolyt-Membran, erhalten durch Aufpfropfen von Seitenketten, die Protonen-leitende funktionelle Gruppen enthalten, auf mindestens eine Folie aus einem Polyethylen, die **dadurch gekennzeichnet ist, dass** das Polyethylen eine Kristallinität von 41 bis 48 % hat.

**2.** Brennstoffzelle, umfassend:

    (a) eine Anode;
    (b) eine Kathode;
    (c) eine Polymer-Elektrolyt-Membran gemäß Anspruch 1.

**3.** Brennstoffzelle gemäß Anspruch 2, worin das Polyethylen eine Kristallinität von 42 bis 46 % hat.

**4.** Brennstoffzelle gemäß Anspruch 2 oder 3, die eine Direkt-Methanol-Brennstoffzelle ist.

**5.** Brennstoffzelle gemäß Anspruch 2 oder 3, die eine Wasserstoffbrennstoffzelle ist.

**6.** Brennstoffzelle gemäß mindestens einem der vorhergehenden Ansprüche, worin die Seitenketten, die Protonen-leitende funktionelle Gruppen enthalten, auf das Polyethylen über eine Sauerstoffbrücke aufgepfropft sind.

**7.** Brennstoffzelle gemäß mindestens einem der vorhergehenden Ansprüche, worin die Menge des Aufpfropfens der Seitenketten, die Protonen-leitende funktionelle Gruppen enthalten, von 10 bis 150 % ist.

**8.** Brennstoffzelle gemäß mindestens einem der vorhergehenden Ansprüche, worin das Polyethylen ausgewählt ist aus:

    - Polyethylen mittlerer Dichte (MDPE);
    - Polyethylen niedriger Dichte (LDPE);
    - linearem Polyethylen niedriger Dichte (LLDPE), Polyethylen sehr niedriger Dichte (VLDPE), Polyethylen ultra-niedriger Dichte (ULDPE), die Copolymere von Ethylen mit mindestens einem aliphatischen $\alpha$-Olefin der Formel $CH_2=CH-R$ sind, worin R eine lineare oder verzweigte, vorzugsweise lineare Alkylgruppe mit 1 bis 12 Kohlenstoffatomen darstellt, wie beispielsweise Propylen, 1-Buten, 1-Penten, 1-Hexen, 1-Octen, 1-Decen;

oder Mischungen davon.

**9.** Brennstoffzelle gemäß mindestens einem der vorhergehenden Ansprüche, worin die Protonen-leitenden funktionellen Gruppen aus Sulfonsäuregruppen und Phosphorsäuregruppen ausgewählt sind.

**10.** Brennstoffzelle gemäß mindestens einem der vorhergehenden Ansprüche, worin die Polymer-Elektrolyt-Membran eine Dicke von 50 $\mu$m bis 250 $\mu$m hat.

**11.** Gerät, das durch eine Brennstoffzelle gemäß mindestens einem der Ansprüche 2 bis 10 angetrieben wird.

**12.** Gerät gemäß Anspruch 11, das ein Motor zum Fahrzeugtransport ist.

**13.** Gerät gemäß Anspruch 11, das ein tragbares elektronisches Gerät ist.

## Revendications

**1.** Membrane électrolyte polymère obtenue par greffage de chaînes latérales contenant des groupes fonctionnels conducteurs de protons sur au moins un film d'un polyéthylène, **caractérisé en ce que** ledit polyéthylène a une cristallinité de 41% à 48%.

**2.** Pile à combustible comprenant:

    (a) une anode ;
    (b) une cathode ;
    (c) une membrane électrolyte polymère selon la revendication 1.

**3.** Pile à combustible selon la revendication 2, dans laquelle ledit polyéthylène a une cristallinité de 42% à 46%.

**4.** Pile à combustible selon la revendication 2 ou 3, qui est une pile à combustible à méthanol direct.

**5.** Pile à combustible selon la revendication 2 ou 3, qui est une pile à combustible à hydrogène.

**6.** Pile à combustible selon l'une quelconque des revendications précédentes, dans laquelle lesdites chaînes latérales contenant les groupes fonctionnels conducteurs de protons sont greffées au polyéthylène par un pont oxygène.

**7.** Pile à combustible selon l'une quelconque des revendications précédentes, dans laquelle la quantité de greffage desdites chaines latérales contenant les groupes fonctionnels conducteurs de protons est de 10% à 150%.

**8.** Pile à combustible selon l'une quelconque des revendications précédentes, dans laquelle ledit polyéthylène est choisi parmi:

    - le polyéthylène à moyenne densité (MDPE);
    - le polyéthylène à basse densité (LDPE);
    - le polyéthylène à basse densité linéaire (LLDPE), polyéthylène à très basse densité (VLDPE), polyéthylène à ultra basse densité (ULDPE), qui sont copolymères d'éthylène avec au moins une $\alpha$-oléfine aliphatique de formule $CH_2=CH-R$ dans laquelle R représente un groupe alkyle linéaire ou ramifié, de préférence linéaire, contenant de 1 à 12 atomes de carbone tel que le propylène, le 1-butène, le 1-pentène, le 1-hexène, le 1-octène, le 1-décène ;

ou des mélanges de ceux-ci.

9. Pile à combustible selon l'une quelconque des revendications précédentes, dans laquelle lesdits groupes fonctionnels conducteurs de protons sont choisis parmi des groupes acide sulfonique et des groupes acide phosphorique.

10. Pile à combustible selon l'une quelconque des revendications précédentes, dans laquelle ladite membrane électrolyte polymère a une épaisseur de 50 $\mu$m à 250 $\mu$m.

11. Dispositif alimenté par une pile à combustible selon l'une quelconque des revendications 2 à 10.

12. Dispositif selon la revendication 11, qui est un moteur pour un véhicule de transport.

13. Dispositif selon la revendication 11, qui est un dispositif électronique portable.

**Fig. 1**

**Fig. 2**

**Fig. 3**

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9822989 A

- WO 04004053 A

**Non-patent literature cited in the description**

- **S. Slade et al.** *Journal of The Electrochemical Society,* 2002, vol. 149 (12), A1556-A1564